# EUROPEAN PATENT APPLICATION

(11) **EP 4 668 700 A1**
(43) Date of publication of application: **24.12.2025**
(21) Application number: 23930049.4
(22) Date of filing: 06.12.2023
(51) Int. Cl.: H04L 45/16

(54) **METHOD AND DEVICE FOR SUPPORTING SEGMENT ROUTING LABEL NETWORK MULTICAST, AND MEDIUM**

(30) Priority: 27.03.2023 CN 202310340830
(71) Applicant: ZTE CORPORATION, Shenzhen, Guangdong 518057 (CN)
(72) Inventor: LIN, Zhi, Shenzhen, Guangdong 518057 (CN)
(74) Representative: Canzler & Bergmeier Patentanwälte Partnerschaft mbB
(86) International application number: PCT/CN2023/136864
(87) International publication number: WO 2024/198483

(57) **Abstract**

The present application relates to the technical field of communications, and discloses a method and device for supporting segment routing label network multicast, and a medium. The method is applied to a network node executing a multicast forwarding operation in a segment routing label network, and comprises: notifying other network nodes in the segment routing label network of a first host address of the current network node, wherein the first host address is configured with a first multicast segment identifier of the current network node, the first multicast segment identifier is used for instructing the current network node to forward first traffic in a multicast mode, and is used for instructing the other network nodes in the segment routing label network to forward the first traffic in a unicast mode, and the first traffic is traffic having forward information matching the first multicast segment identifier.

## Description

### CROSS REFERENCE TO RELATED APPLICATIONS

The present disclosure claims the priority to Chinese Patent Application No. 202310340830.8 filed on March 27, 2023, the contents of which are incorporated herein by reference in their entirety.

### TECHNICAL FIELD

The present disclosure relates to the field of communications, and in particular, to a method for supporting multicast in a segment routing label network, a device for supporting multicast in a segment routing label network, and a computer-readable storage medium.

### BACKGROUND

At present, the Interior Gateway Protocol and the Border Gateway Protocol (BGP) which support the segment routing technology have not clearly defined distribution and learning of multicast segment identifiers, such that the use of the multicast segment identifiers is prone to errors.

### SUMMARY

The present disclosure mainly aims to provide a method for supporting multicast in a segment routing label network, a device for supporting multicast in a segment routing label network, and a computer-readable storage medium, so as to solve the technical problem that the gateway protocols in the existing technology can hardly support forwarding multicast traffic based on segment routing in a segment routing label network.

In order to achieve the above objective, the present disclosure provides a method for supporting multicast in a segment routing label network, the method being applied to a network node which performs a multicast forwarding operation in a segment routing label network, and including:
advertising a first host address of a current network node to other network nodes in the segment routing label network;
wherein the first host address is configured with a first multicast segment identifier of the current network node, the first multicast segment identifier is configured to instruct the current network node to multicast forward first traffic and to instruct the other network nodes in the segment routing label network to unicast forward the first traffic, and the first traffic is traffic having forwarding information matched with the first multicast segment identifier.

The present disclosure further provides a device for supporting multicast in a segment routing label network, including: a storage device, a processor, and a computer program which is stored in the storage device and is executable on the processor, and when the computer program is executed by the processor, operations of the above method for supporting multicast in a segment routing label network are implemented.

The present disclosure further provides a computer-readable storage medium having stored thereon a computer program which, when executed by a processor, implements operations of the above method for supporting multicast in a segment routing label network.

### BRIEF DESCRIPTION OF DRAWINGS

FIG. 1 is a flowchart illustrating a method for supporting multicast in a segment routing label network according to an embodiment of the present disclosure;
FIG. 2 is a schematic diagram of a prefix segment identifier sub-TLV (Type-Length-Value) and a newly added multicast flag under the Intermediate System to Intermediate System (ISIS) protocol according to an embodiment of the method for supporting multicast in a segment routing label network in the present disclosure;
FIG. 3 is a schematic diagram of an extended prefix TLV and a flag field of the extended prefix TLV under the Open Shortest Path First Version 2 (OSPFv2) according to an embodiment of the method for supporting multicast in a segment routing label network in the present disclosure;
FIG. 4 is a schematic diagram of a prefix segment identifier sub-TLV and a newly added multicast flag under the OSPFv2 according to an embodiment of the method for supporting multicast in a segment routing label network in the present disclosure;
FIG. 5 is a schematic diagram of an intra-area prefix TLV, an inter-area prefix TLV, and an external prefix TLV and flags in PrefixOptions fields thereof under the OSPFv3 according to an embodiment of the method for supporting multicast in a segment routing label network in the present disclosure;
FIG. 6 is a schematic diagram of a prefix segment identifier sub-TLV and a newly added multicast flag under the OSPFv3 according to an embodiment of the method for supporting multicast in a segment routing label network in the present disclosure;
FIG. 7 is a schematic diagram of a prefix segment identifier TLV and a newly added multicast flag under the BGP according to an embodiment of the method for supporting multicast in a segment routing label network in the present disclosure;
FIG. 8 is a schematic view of a multicast segment identifier forwarding structure according to an embodiment of the method for supporting multicast in a segment routing label network in the present disclosure;
FIG. 9 is a schematic structural diagram of an operating device in a hardware operating environment according to an embodiment of the present disclosure.

The implementation of the objectives of the present disclosure and the functional features and advantages of the present disclosure will be further described in conjunction with the embodiments and with reference to the drawings.

### DETAIL DESCRIPTION OF EMBODIMENTS

It should be understood that the specific embodiments described herein are merely intended to explain the present disclosure, rather than limiting the present disclosure.

At present, a multicast segment identifier is configured to represent each device supporting a multicast segment identifier forwarding structure, an ingress device encapsulates a multicast segment list after receiving multicast traffic, and each element in the multicast segment list is a multicast segment identifier forwarding structure. Since the multicast segment identifier forwarding structure can instruct a node how to specifically perform forwarding, intermediate devices are not desired to learn to maintain a forwarding status of each multicast distribution tree, and a device which does not support the multicast segment identifier forwarding structure can also forward the multicast segment identifier as a unicast prefix segment identifier, resulting in good backward compatibility. However, at present, the Interior Gateway Protocol and the BGP which support the segment routing technology have not clearly defined distribution and learning of multicast segment identifiers, such that the use of the multicast segment identifiers is prone to errors.

In addition, ideally, if all network nodes in a segment routing label network support a multicast forwarding operation and can identify common unicast segment identifiers and newly added multicast segment identifiers, unicast traffic can be encapsulated with unicast segment identifiers, and multicast traffic can be encapsulated with multicast segment identifiers. However, some network nodes cannot understand the newly added multicast segment identifiers, and learn and use the newly added multicast segment identifiers as common unicast segment identifiers, which may possibly cause the situation of encapsulating the unicast traffic with the multicast segment identifiers.

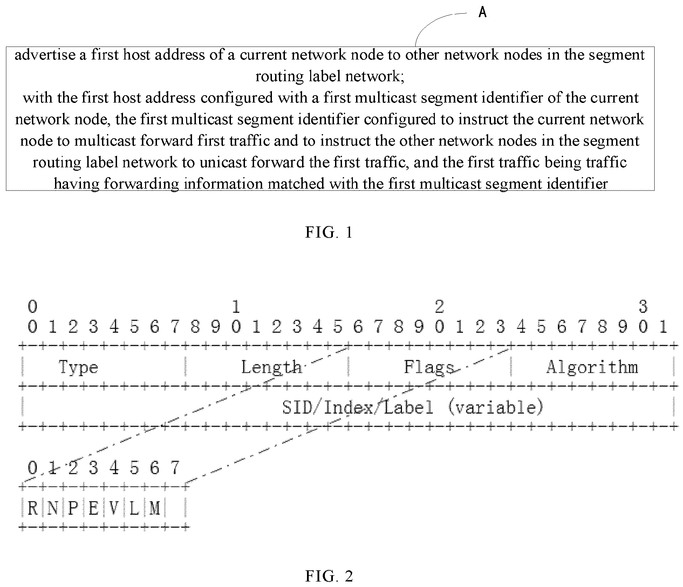

The embodiments of the present disclosure provide a method for supporting multicast in a segment routing label network. Referring to FIG. 1, in an embodiment of the method for supporting multicast in a segment routing label network, the method is applied to a network node which performs a multicast forwarding operation in a segment routing label network, and the method includes:
operation A, advertising a first host address of a current network node to other network nodes in the segment routing label network;
with the first host address configured with a first multicast segment identifier of the current network node, the first multicast segment identifier configured to instruct the current network node to multicast forward first traffic and to instruct the other network nodes in the segment routing label network to unicast forward the first traffic, and the first traffic being traffic having forwarding information matched with the first multicast segment identifier.

The present embodiment provides a method for the network node performing a multicast forwarding operation in the segment routing label network to advertise the multicast segment identifier of the network node performing a multicast forwarding operation.

First, the first host address is configured for the current network node, and is an Internet Protocol Version 4 (IPv4) host address or an Internet Protocol Version 6 (IPv6) host address, the first multicast segment identifier for segment routing is configured for the first host address, the first multicast segment identifier belongs to a prefix segment identifier, and the configuration of the multicast segment identifier satisfies network uniqueness, that is, the multicast segment identifier uniquely identifies one network node in the segment routing label network.

Secondly, the current network node advises the first host address thereof to the other network nodes in the same segment routing label network, a routing prefix of the first host address carries the corresponding first multicast segment identifier, and the other network nodes learn the first multicast segment identifier of the first host address through a corresponding gateway protocol, and may generate a label unicast forwarding entry as if learning a common prefix segment identifier.

Then, when an outmost multicast segment identifier of a segment list encapsulated in traffic received by a network node is a multicast segment identifier of another device, the network node unicast forwards the traffic; and when the outmost multicast segment identifier of the segment list encapsulated in the traffic received by the network node is a multicast segment identifier advised by the network node itself, the network node performs multicast replication and forwarding as instructed by a multicast segment identifier forwarding structure.

Illustratively, the first host address further includes a multicast flag corresponding to the multicast segment identifier and flag information matched with the multicast segment identifier; and the multicast flag is configured to represent multicast capability of the current network node.

In the present embodiment, the multicast segment identifier is carried in the routing prefix of the first host address of the current network node, and the multicast flag corresponding to the multicast segment identifier and the flag information matched with the multicast segment identifier are set in the routing prefix of the first host address of the current network node. The multicast flag is configured to represent the multicast capability of the current network node, the multicast flag is set, and a flag matched with the multicast segment identifier is set or cleared, so as to support the network node in the segment routing label network to multicast forward the traffic.

Referring to FIG. 2, in an embodiment, a network node supporting the ISIS segment routing may carry a prefix segment identifier sub-TLV shown in FIG. 2 in an advertised extended IP reachability TLV (TLV-135), multi-topology IPv4 IP reachability TLV (TLV-235), IPv6 IP reachability TLV (TLV-236), or multi-topology IPv6 IP reachability TLV (TLV-237), and add a multicast flag (M) to a flag field of the prefix segment identifier sub-TLV.

The network node is configured with a local IPv4 host address or a local IPv6 host address, a multicast segment identifier is configured for the host address, the host address is advertised under the ISIS protocol, the host address is advertised with a corresponding reachability TLV (the local IPv4 host address corresponds to TLV-135 and TLV-235, and the local IPv6 host address corresponds to TLV-236 and TLV-237), and an M flag in the flag field of the prefix segment identifier sub-TLV carried by the reachability TLV is set.

In addition, besides setting the M flag, in the prefix segment identifier sub-TLV, an N flag needs to be set, a P flag needs to be set, and an E flag needs to be cleared. By setting the N flag, the multicast segment identifier can uniquely correspond to the (one) network node; and by setting the P flag and clearing the E flag, penultimate hop popping is prohibited, and the outermost multicast segment identifier is reserved for further forwarding.

In the embodiment illustrated by FIG. 2, in addition to including setting information of the multicast flag M, the flag information further includes setting information or clearing information corresponding to matched flags such as N, P, and E.

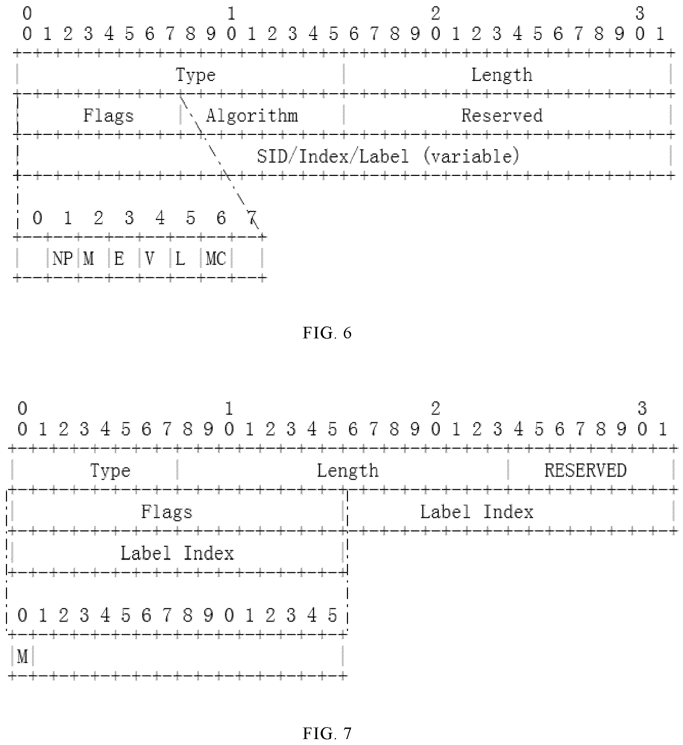

Referring to FIG. 7, in an embodiment, a network node supporting BGP segment routing carries a prefix segment identifier TLV under the BGP as shown in FIG. 7 in network layer reachability information advertised in an IPv4/IPv6 labeled unicast address family, and adds a multicast (M) flag to a flag field of the prefix segment identifier.

The network node is configured with a local IPv4 host address or a local IPv6 host address, a multicast segment identifier is configured for the host address, the host address is advertised in the IPv4/IPv6 labeled unicast address family under the BGP, the host address is advertised with the corresponding network layer reachability information in the labeled unicast address family, and the multicast flag in the flag field of the prefix segment identifier carried by the network layer reachability information is set.

In the embodiment illustrated by FIG. 7, the flag information is setting information of the multicast flag M.

The embodiments of the present disclosure provide the method for supporting multicast in a segment routing label network, and in an embodiment of the method for supporting multicast in a segment routing label network, advertising the first host address of the current network node to the other network nodes in the segment routing label network includes:
carrying a multicast segment identifier in a routing prefix corresponding to the first host address of the current network node; and
advertising the routing prefix to the other network nodes in the segment routing label network, so as to advertise the first multicast segment identifier of the current network node to the other network nodes.

When the first host address of the current network node is advertised to the other network nodes in the segment routing label network, the multicast segment identifier is carried in the routing prefix corresponding to the first host address of the current network node. By advertising the routing prefix to the other network nodes in the segment routing label network, the first multicast segment identifier of the current network node is advertised to the other network nodes. That is, the multicast segment identifier is carried in the routing prefix corresponding to the host address, so as to complete the advertisement of the first multicast segment identifier of the current network node in the segment routing label network.

Illustratively, carrying the multicast segment identifier in the routing prefix corresponding to the first host address of the current network node includes:
in a case where a gateway protocol is the ISIS protocol or the OSPF protocol, carrying a prefix segment identifier sub-TLV in a corresponding routing prefix TLV under the corresponding gateway protocol, with the prefix segment identifier sub-TLV carrying the multicast segment identifier and provided with a multicast flag; and
in a case where the gateway protocol is the BGP, carrying a prefix segment identifier TLV in network layer reachability information corresponding to the routing prefix, with the prefix segment identifier TLV carrying the multicast segment identifier and provided with a multicast flag.

Referring to FIG. 2, the network node supporting the ISIS segment routing carries the prefix segment identifier sub-TLV shown in FIG. 2 in an advertised extended IP reachability TLV (TLV-135), multi-topology IPv4 IP reachability TLV (TLV-235), IPv6 IP reachability TLV (TLV-236), or multi-topology IPv6 IP reachability TLV (TLV-237), that is, carrying the prefix segment identifier sub-TLV in an reachability TLV, and adds the multicast flag (M) to the flag field of the prefix segment identifier sub-TLV. The multicast flag may be set at a position which includes, but is not limited to, a position corresponding to index=6 in a Flags field, and may also be set at other agreed field positions.

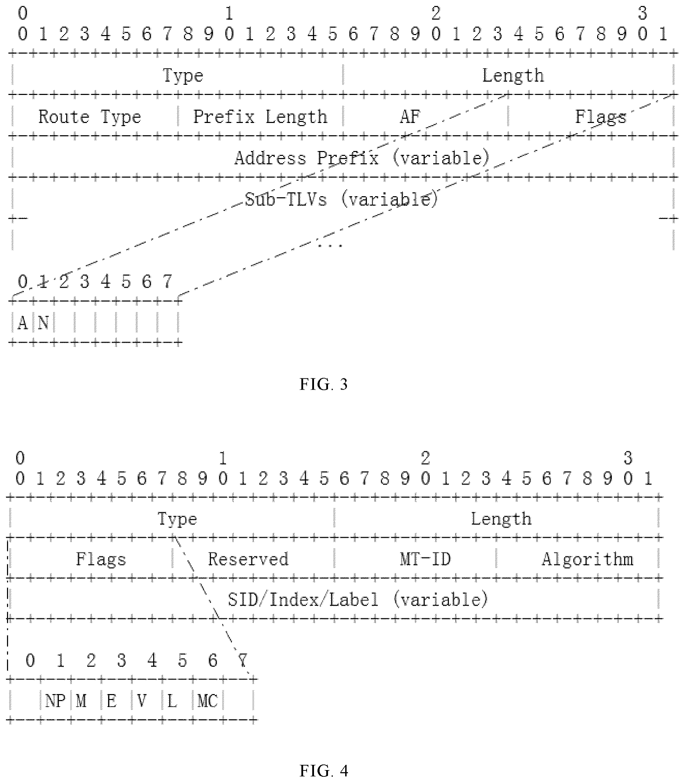

Referring to FIG. 3 and FIG. 4, a network node supporting OSPFv2 segment routing carries an extended prefix TLV shown in FIG. 3, which carries a prefix segment identifier sub-TLV shown in FIG. 4, in an advertised Extended Prefix Opaque Link State Advertisement, and adds a multicast (MC) flag to a flag field of the prefix segment identifier sub-TLV. The multicast flag may be set at a position which includes, but is not limited to, a position corresponding to index=6 in a Flags field, and may also be set at other agreed field positions.

The network node is configured with a local IPv4 host address, a multicast segment identifier is configured for the host address, the host address is advertised under the OSPFv2, the host address is advertised with the extended prefix TLV, the MC flag in the flag field of the prefix segment identifier sub-TLV carried by the extended prefix TLV is set, and an N flag in a flag field of the extended prefix TLV is set. In the prefix segment identifier sub-TLV having the MC flag set, an NP flag is also set and an E flag is cleared. By setting the NP flag and clearing the E flag, penultimate hop popping is prohibited, and an outermost label is reserved for forwarding.

A network node on a multicast forwarding path determines whether to perform subsequent forwarding in a multicast mode or a unicast mode by checking whether the outermost multicast segment identifier of the traffic is equal to a multicast segment identifier advertised by the network node itself. The usage of other flags of the prefix segment identifier sub-TLV is consistent with the conventional usage under OSPFv2-supported segment routing. The N flag in the flag field of the extended prefix TLV is set to indicate that the prefix uniquely corresponds to the (one) network node.

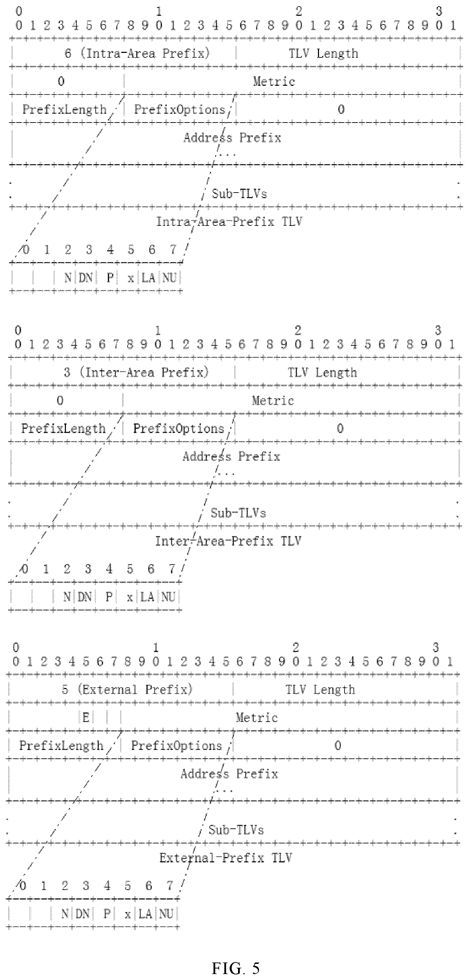

Referring to FIG. 5 and FIG. 6, a network node supporting OSPFv3 segment routing carries an intra-area prefix TLV, an inter-area prefix TLV, and an external prefix TLV shown in FIG. 5 in an advertised E-Intra-Area-Prefix-LSA, an advertised E-Inter-Area-Prefix-LSA, and an advertised E-AS-External-LSA or E-NSSA-LSA, respectively. Each prefix TLV in FIG. 5 is capable of carrying a prefix segment identifier sub-TLV shown in FIG. 6, and a multicast (MC) flag is added to a flag field of the prefix segment identifier sub-TLV. The multicast flag may be set at a position which includes, but is not limited to, a position corresponding to index=6 in a Flags field, and may also be set at other agreed field positions.

The network node is configured with a local IPv6 host address, a multicast segment identifier is configured for the host address, the host address is advertised under the OSPFv3, the host address is advertised with the prefix TLV, the MC flag in the flag field of the prefix segment identifier sub-TLV carried by the prefix TLV is set, and an N flag in a PrefixOptions field of the prefix TLV is set. In the prefix segment identifier sub-TLV, an NP flag is set and an E flag is cleared while setting the MC flag. By setting the NP flag and clearing the E flag, penultimate hop popping is prohibited, and an outermost label is reserved for forwarding.

A network node on a multicast forwarding path determines whether to perform subsequent forwarding in a multicast mode or a unicast mode by checking whether the outermost multicast segment identifier of the traffic is equal to a multicast segment identifier advertised by the network node itself. The usage of other flags of the prefix segment identifier sub-TLV is consistent with the conventional usage under OSPFv3-supported segment routing. The N flag in the PrefixOptions field of the prefix TLV is set to indicate that the prefix uniquely corresponds to the (one) network node.

Referring to FIG. 7, the network node supporting BGP segment routing carries the prefix segment identifier TLV under the BGP as shown in FIG. 7 in the network layer reachability information advertised in the IPv4/IPv6 labeled unicast address family, and adds the M flag to the flag field of the prefix segment identifier. The multicast flag may be set at a position which includes, but is not limited to, a position corresponding to index=0 in a Flags field, and may also be set at other agreed field positions.

The network node is configured with a local IPv4 host address or a local IPv6 host address, a multicast segment identifier is configured for the host address, the host address is advertised in the IPv4/IPv6 labeled unicast address family under the BGP, the host address is advertised with the corresponding network layer reachability information in the labeled unicast address family, and the multicast flag in the flag field of the prefix segment identifier carried by the network layer reachability information is set.

In the present embodiment, the host address is advertised under the ISIS protocol, the prefix segment identifier sub-TLV is carried in the TLV used for advertising the information of the prefix under the ISIS protocol, the multicast flag is added to the flag field of the prefix segment identifier sub-TLV, and the added multicast flag may be set.

The host address is advertised under the OSPF, the prefix segment identifier sub-TLV is carried in the extended prefix TLV in an Opaque Link-State Advertisement (Opaque LSA) under the OSPFv2, the prefix segment identifier sub-TLV is carried in the intra-area prefix TLV, the inter-area prefix TLV, or the external prefix TLV of the Extended LSA under the OSPFv3, the multicast flag is added to the flag field of the prefix segment identifier sub-TLV, and the added multicast flag may be set.

The host address is advertised in the labeled address family under the BGP, the prefix segment identifier TLV is carried in the network layer reachability information under the BGP, the multicast flag is added to the flag field of the prefix segment identifier TLV, and the added multicast flag may be set.

The present disclosure clearly defines the distribution of the multicast segment identifier, and provides clear guidance on actions of the distribution of the multicast segment identifier under the IS-IS protocol, the OSPF protocol, and the BGP. The network node advises the multicast segment identifier, thereby supporting the realization of the segment routing-based multicast traffic in the segment routing label network.

The embodiments of the present disclosure provide the method for supporting multicast in a segment routing label network, and in an embodiment of the method for supporting multicast in a segment routing label network, the method further includes:
operation B, acquiring routing prefixes of second host addresses advertised by the other network nodes in the segment routing label network, acquiring second multicast segment identifiers corresponding to the other network nodes based on the second host addresses, and generating unicast forwarding table entries based on the second multicast segment identifiers;
with the unicast forwarding table entries configured to instruct the current network node to unicast forward second traffic, and the second traffic being traffic having forwarding information matched with the second multicast segment identifiers.

The present embodiment provides a method for learning the multicast segment identifiers carried in the routing prefixes. The advertisement and the learning by the network node can be performed simultaneously, and an order in which the advertisement and the learning are performed is not limited herein.

After the routing prefixes of the second host addresses are received from the other network nodes in the segment routing label network, the second host addresses corresponding to the routing prefixes are parsed to obtain the second multicast segment identifiers corresponding to the other network nodes, and the unicast forwarding table entries for instructing the current network node to unicast forward the received second traffic are generated based on the second multicast segment identifiers, with the second traffic being the traffic having the forwarding information matched with the second multicast segment identifiers.

In an embodiment, if the current network node cannot identify the set multicast flag in the prefix segment identifier, that is, the current network node cannot understand the meaning of the extended multicast flag based on the existing protocols, based on the conventional support for segment routing under the ISIS protocol, the OSPF protocol, and the BGP, the multicast segment identifier is processed as a common unicast prefix segment identifier, a unicast forwarding table entry is generated for the multicast segment identifier, and the received second traffic is forwarded in a unicast mode. If the device can understand the set multicast flag in the prefix segment identifier, that is, the device can understand the meaning of the multicast flag at the pre-agreed appointed bit position, the device records that the multicast segment identifier is not used for unicast Loop Free Alternate (LFA) calculation in addition to generating a unicast forwarding table entry for the multicast segment identifier, and unicast traffic initially sent from the current network node does not use the multicast segment identifier. When an outmost label of received traffic is equal to a multicast segment identifier which is not locally advertised, the traffic is forwarded in a unicast mode based on the generated unicast forwarding table entry.

In the present embodiment, a rule of learning the multicast segment identifiers carried in the routing prefixes is set, thereby supporting the realization of the segment routing-based multicast traffic in the segment routing label network.

The embodiments of the present disclosure provide the method for supporting multicast in a segment routing label network, and in an embodiment of the method for supporting multicast in a segment routing label network, after generating the unicast forwarding table entries based on the second multicast segment identifiers, the method includes:
operation C, receiving and parsing traffic to obtain forwarding information of the traffic, with the forwarding information including an outermost multicast segment identifier encapsulated in the traffic;
operation E, in a case where a processing node indicated by the outermost multicast segment identifier is not the current network node, unicast forwarding the traffic based on a unicast forwarding table entry corresponding to the outermost multicast segment identifier; and
operation F, in a case where the processing node indicated by the outermost multicast segment identifier is the current network node, multicast forwarding the traffic.

The present embodiment provides a method for processing received traffic by a network node.

After each network node in the segment routing label network completes the advertisement and the learning of the multicast segment identifiers, the current network node receives the traffic encapsulated with a multicast segment list. In a case where the processing node indicated by the outermost multicast segment identifier in the multicast segment list is not the current network node, the current network node unicast forwards the traffic based on the unicast forwarding table entry corresponding to the outermost multicast segment identifier to the network node indicated by the outermost multicast segment identifier; and in a case where the processing node indicated by the outermost multicast segment identifier is the current network node, the current network node multicast forwards the traffic to one or more network nodes indicated by one or more forwarding structures in the multicast segment list.

Illustratively, after receiving and parsing the traffic to obtain the forwarding information of the traffic, the method includes:
operation D1, after determining that the outermost multicast segment identifier is different from the multicast segment identifier corresponding to the current network node, determining that the processing node indicated by the outermost multicast segment identifier is not the current network node; and
operation D2, after determining that the outermost multicast segment identifier is the same as the multicast segment identifier corresponding to the current network node, determining that the processing node indicated by the outermost multicast segment identifier is the current network node.

After receiving and parsing the traffic to obtain the forwarding information of the traffic and before determining whether to unicast forward or multicast forward the traffic, it is determined whether the processing node indicated by the outermost multicast segment identifier which is encapsulate in the traffic and is included in the forwarding information of the traffic is the current network node.

If the outmost multicast segment identifier is different from the multicast segment identifier corresponding to the current network node, it may be determined that the processing node indicated by the outmost multicast segment identifier is not the current network node; accordingly, if the outermost multicast segment identifier is the same as the multicast segment identifier corresponding to the current network node, it may be determined that the processing node indicated by the outermost multicast segment identifier is the current network node.

In the present embodiment, the forwarding and processing rule is set based on the multicast segment identifier, thereby supporting the realization of the segment routing-based multicast traffic in the segment routing label network.

The embodiments of the present disclosure provide a method for supporting multicast in a segment routing label network, and in an embodiment of the method for supporting multicast in a segment routing label network, before multicast forwarding the traffic, the method further includes:
operation F1, determining a traffic type corresponding to the traffic;
operation F2, in a case of determining the traffic type as unicast traffic, unicast forwarding the traffic; and
operation F3, in a case of determining the traffic type as multicast traffic, multicast forwarding the traffic.

The present embodiment provides a method for detecting and processing misuse of the multicast segment identifier by a node in the segment routing label network which is not capable of supporting segment routing multicast forwarding capability.

Since a network node not capable of supporting the multicast segment identifier may exist in the segment routing label network and may mistakenly use the multicast segment identifier as a common unicast segment identifier, it may be the case that the traffic which is received by the network node supporting the multicast segment identifier and has the outermost segment identifier equal to the locally advertised multicast segment identifier is unicast traffic.

Therefore, in the present embodiment, after determining that the processing node indicated by the outermost multicast segment identifier of the traffic is the current network node and before multicast forwarding the traffic, the traffic type is determined, so as to determine whether the multicast segment identifier is misused.

After determining the traffic type, in a case of determining the traffic type as multicast traffic, it is determined that the multicast segment identifier is not misused, then the traffic may be multicast forwarded; and in a case of determining the traffic type as unicast traffic, it is determined that the multicast segment identifier is misused, then the traffic is unicast forwarded.

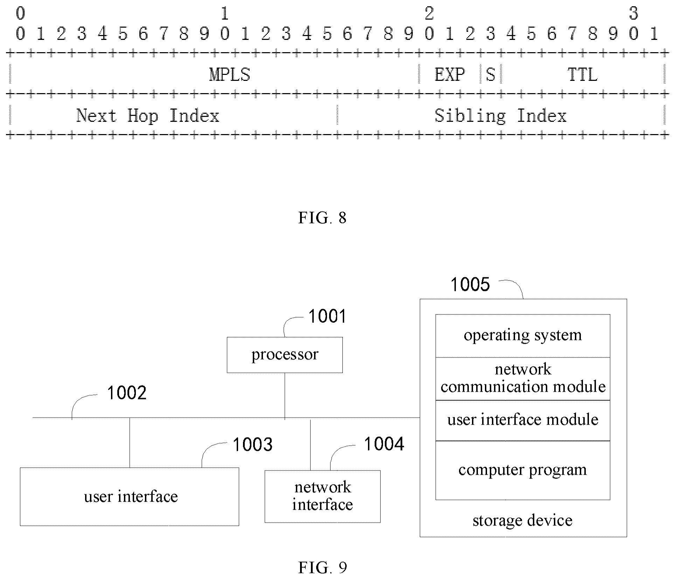

Referring to FIG. 8, the multicast segment identifier forwarding structure includes a multicast segment identifier, a Next Hop Index of a node indicated by the multicast segment identifier, and a Sibling Index of the node indicated by the multicast segment identifier. The multicast segment identifier is configured to indicate the unique network node in the segment routing label network; the Next Hop Index is configured to indicate a position of a multicast segment identifier forwarding structure of a first downstream node of the node indicated by the multicast segment identifier in a multicast segment list; the Sibling Index is configured to indicate a position of a multicast segment identifier forwarding structure of a sibling node, which has a same father node as the node indicated by the multicast segment identifier, in the multicast segment list; and the multicast segment identifier forwarding structure is configured to determine a sub-multicast segment list corresponding to an independent downstream subtree of the node.

The first 32 bits of the multicast segment identifier forwarding structure are of a standard label structure, the first 16 bits in the second 32 bits are for the Next Hop Index, and the last 16 bits of the second 32 bits are for the Sibling Index. In an outermost multicast segment identifier forwarding structure, a valid value of the Next Hop Index is merely equal to a first preset value or a second preset value, and a valid value of the Sibling Index is merely equal to the first preset value. In an implementation, the first preset value is 0x0000, and the second preset value is 0x0002. The first preset value indicates that the current network node has no other downstream independent subtrees, and the second preset value indicates a position of a root node of a first independent downstream subtree of the current network node in the multicast segment list. In a case where the outermost multicast segment identifier is the same as the multicast segment identifier corresponding to the current network node and the following 32 bits are equal to a third preset value or a fourth preset value, the traffic type is determined as multicast traffic; and in other cases, the traffic type is determined as unicast traffic. In an implementation, the third preset value is 0x00000000, and the fourth preset value is 0x00020000, because the third preset value and the fourth preset value neither represent a valid label structure nor a valid IP header or Ethernet header.

In the present embodiment, the rule and method for detecting and processing the misuse of the multicast segment identifier are provided, thereby supporting the realization of the segment routing-based multicast traffic in the segment routing label network.

In the present embodiment, the distribution, learning, and use of the multicast segment identifier are clearly defined, and the network node advertises and learns the multicast segment identifier, thereby supporting the realization of the segment routing-based multicast traffic in the segment routing label network.

In addition, an embodiment of the present disclosure further provides a device for supporting multicast in a segment routing label network, including: a storage device, a processor, and a computer program which is stored in the storage device and is executable on the processor, and when the computer program is executed by the processor, the operations of the above method for supporting multicast in a segment routing label network are implemented.

In addition, an embodiment of the present disclosure further provides a computer-readable storage medium having stored thereon a computer program which, when executed by a processor, implements the operations of the above method for supporting multicast in a segment routing label network.

Referring to FIG. 9, FIG. 9 is a schematic structural diagram of an operating device in a hardware operating environment according to an embodiment of the present disclosure.

As shown in FIG. 9, the operating device may include: a processor 1001 such as a Central Processing Unit (CPU), a communication bus 1002, a user interface 1003, a network interface 1004, and a storage device 1005. The communication bus 1002 is configured to enable connection and communication between the components. The user interface 1003 may include a display and an input unit such as a keyboard, and may further include a standard wired interface and/or a standard wireless interface. The network interface 1004 may include a standard wired interface and/or a standard wireless interface (e.g., a Wireless-Fidelity (WI-FI) interface). The storage device 1005 may be a high-speed Random Access Memory (RAM) or a stable Non-Volatile Memory (NVM) such as a disk memory. The storage device 1005 may also be a storage device independent of the processor 1001.

It should be understood by those of ordinary skill in the art that the structure shown in FIG. 9 does not constitute any limitation to the operating device, and the operating device may include more or fewer components than those shown in FIG. 9, or is provided with a combination of some components, or has different arrangement of the components.

As shown in FIG. 9, the storage device 1005 as a storage medium may include an operating system, a data storage module, a network communication module, a user interface module, and a computer program.

In the operating device shown in FIG. 9, the network interface 1004 is mainly configured to perform data communication with other devices; the user interface 1003 is mainly configured to perform data interaction with a user; and the processor 1001 and the storage device 1005 in the operating device in the present embodiment may be disposed in an operating device, and the operating device calls the computer program stored in the storage device 1005 through the processor 1001, and performs the following operations:
advertising the first host address of the current network node to the other network nodes in the segment routing label network;
with the first host address configured with the first multicast segment identifier of the current network node, the first multicast segment identifier configured to instruct the current network node to multicast forward the first traffic and to instruct the other network nodes in the segment routing label network to unicast forward the first traffic, and the first traffic being the traffic having the forwarding information matched with the first multicast segment identifier.

In an embodiment, the first host address further includes the multicast flag corresponding to the multicast segment identifier and the flag information matched with the multicast segment identifier; and the multicast flag is configured to represent the multicast capability of the current network node.

In an embodiment, the processor 1001 may call the computer program stored in the storage device 1005 and further perform the following operations:
advertising the first host address of the current network node to the other network nodes in the segment routing label network, which includes:
carrying the multicast segment identifier in the routing prefix corresponding to the first host address of the current network node;
advertising the routing prefix to the other network nodes in the segment routing label network, so as to advertise the first multicast segment identifier of the current network node to the other network nodes.

In an embodiment, the processor 1001 may call the computer program stored in the storage device 1005 and further perform the following operations:
carrying the multicast segment identifier in the routing prefix corresponding to the first host address of the current network node, which includes:
in a case where the gateway protocol is the ISIS protocol or the OSPF protocol, carrying the prefix segment identifier sub-TLV in the corresponding routing prefix TLV under the corresponding gateway protocol, with the prefix segment identifier sub-TLV carrying the multicast segment identifier and provided with the multicast flag; and
in a case where the gateway protocol is the BGP, carrying the prefix segment identifier TLV in the network layer reachability information corresponding to the routing prefix, with the prefix segment identifier TLV carrying the multicast segment identifier and provided with the multicast flag.

In an embodiment, the processor 1001 may call the computer program stored in the storage device 1005 and further perform the following operations:
acquiring the routing prefixes of the second host addresses advertised by the other network nodes in the segment routing label network, acquiring the second multicast segment identifiers corresponding to the other network nodes based on the second host addresses, and generating the unicast forwarding table entries based on the second multicast segment identifiers;
with the unicast forwarding table entries configured to instruct the current network node to unicast forward the second traffic, and the second traffic being the traffic having the forwarding information matched with the second multicast segment identifiers.

In an embodiment, the processor 1001 may call the computer program stored in the storage device 1005 and further perform, after generating the unicast forwarding table entries based on the second multicast segment identifiers, the following operations:
receiving and parsing the traffic to obtain the forwarding information of the traffic, with the forwarding information including the outermost multicast segment identifier encapsulated in the traffic;
in a case where the processing node indicated by the outermost multicast segment identifier is not the current network node, unicast forwarding the traffic based on a unicast forwarding table entry corresponding to the outermost multicast segment identifier; and
in a case where the processing node indicated by the outermost multicast segment identifier is the current network node, multicast forwarding the traffic.

In an embodiment, the processor 1001 may call the computer program stored in the storage device 1005 and further perform, after receiving and parsing the traffic to obtain the forwarding information of the traffic, the following operations:
after determining that the outermost multicast segment identifier is different from the multicast segment identifier corresponding to the current network node, determining that the processing node indicated by the outermost multicast segment identifier is not the current network node; and
after determining that the outermost multicast segment identifier is the same as the multicast segment identifier corresponding to the current network node, determining that the processing node indicated by the outermost multicast segment identifier is the current network node.

In an embodiment, the processor 1001 may call the computer program stored in the storage device 1005 and further perform, before multicast forwarding the traffic, the following operations:
determining the traffic type corresponding to the traffic;
in a case of determining the traffic type as unicast traffic, unicast forwarding the traffic; and
in a case of determining the traffic type as multicast traffic, multicast forwarding the traffic.

It should be noted that the term "include", "comprise" or any other variation thereof used in the present disclosure is intended to indicate a non-exclusive inclusion, so that a process, method, article, or system, which includes a series of elements, does not only include those elements but also include other elements that are not explicitly listed or the elements inherent in such process, method, article, or system. If there are no more limitations, limiting an element by "including a..." does not exclude the existence of other identical elements in the process, method, article, or system which includes the element.

Through the above description of the implementations, those of ordinary skill in the art can understand clearly that the method according to the above embodiments may be implemented by software together with a necessary general-purpose hardware platform, and may also be implemented by hardware, but the former is better in many cases. Based on such understanding, the technical solutions of the present disclosure or a part of the technical solutions of the present disclosure which contributes to the existing technology may be implemented in a form of a software product, and the computer software product is stored in a storage medium as described above (such as a Read-Only Memory (ROM)/RAM, a magnetic disk, or an optical disc), and includes several instructions to enable a terminal device (which may be a mobile phone, a computer, a server, or a network node) to perform the method described in each embodiment of the present disclosure.

What is described above is just the optional embodiments of the present disclosure, and is not intended to limit the scope of the present disclosure, and all equivalent structures or equivalent flow transformations derived from the contents of the description and the drawings of the present disclosure or direct/indirect applications of the contents of the description and the drawings of the present disclosure to other related technical fields should be included in the scope of the present disclosure.

## Claims

1. A method for supporting multicast in a segment routing label network, the method being applied to a network node which performs a multicast forwarding operation in a segment routing label network, and comprising:
advertising a first host address of a current network node to other network nodes in the segment routing label network;
wherein the first host address is configured with a first multicast segment identifier of the current network node, the first multicast segment identifier is configured to instruct the current network node to multicast forward first traffic and to instruct the other network nodes in the segment routing label network to unicast forward the first traffic, and the first traffic is traffic having forwarding information matched with the first multicast segment identifier.

2. The method for supporting multicast in a segment routing label network of claim 1, wherein the first host address further comprises a multicast flag corresponding to the multicast segment identifier and flag information matched with the multicast segment identifier; and the multicast flag is configured to represent multicast capability of the current network node.

3. The method for supporting multicast in a segment routing label network of claim 1, wherein advertising the first host address of the current network node to the other network nodes in the segment routing label network comprises:
carrying the multicast segment identifier in a routing prefix corresponding to the first host address of the current network node; and
advertising the routing prefix to the other network nodes in the segment routing label network, so as to advertise the first multicast segment identifier of the current network node to the other network nodes.

4. The method for supporting multicast in a segment routing label network of claim 3, wherein carrying the multicast segment identifier in the routing prefix corresponding to the first host address of the current network node comprises:
in a case where a gateway protocol is Intermediate System to Intermediate System (ISIS) protocol or Open Shortest Path First (OSPF) protocol, carrying a prefix segment identifier sub-Type-Length-Value (sub-TLV) in a corresponding routing prefix TLV under the corresponding gateway protocol; wherein the prefix segment identifier sub-TLV carries the multicast segment identifier and is provided with a multicast flag; and
in a case where the gateway protocol is the Border Gateway Protocol (BGP), carrying a prefix segment identifier TLV in network layer reachability information corresponding to the routing prefix; wherein the prefix segment identifier TLV carries the multicast segment identifier and is provided with a multicast flag.

5. The method for supporting multicast in a segment routing label network of claim 1, further comprising:
acquiring routing prefixes of second host addresses advertised by the other network nodes in the segment routing label network, acquiring second multicast segment identifiers corresponding to the other network nodes based on the second host addresses, and generating unicast forwarding table entries based on the second multicast segment identifiers;
wherein the unicast forwarding table entries are configured to instruct the current network node to unicast forward second traffic, and the second traffic is traffic having forwarding information matched with the second multicast segment identifiers.

6. The method for supporting multicast in a segment routing label network of claim 5, wherein after generating the unicast forwarding table entries based on the second multicast segment identifiers, the method comprises:
receiving and parsing traffic to obtain forwarding information of the traffic, with the forwarding information comprising an outermost multicast segment identifier encapsulated in the traffic;
in a case where a processing node indicated by the outermost multicast segment identifier is not the current network node, unicast forwarding the traffic based on a unicast forwarding table entry corresponding to the outermost multicast segment identifier; and
in a case where the processing node indicated by the outermost multicast segment identifier is the current network node, multicast forwarding the traffic.

7. The method for supporting multicast in a segment routing label network of claim 6, wherein after receiving and parsing the traffic to obtain the forwarding information of the traffic, the method comprises:
after determining that the outermost multicast segment identifier is different from the multicast segment identifier corresponding to the current network node, determining that the processing node indicated by the outermost multicast segment identifier is not the current network node; and
after determining that the outermost multicast segment identifier is the same as the multicast segment identifier corresponding to the current network node, determining that the processing node indicated by the outermost multicast segment identifier is the current network node.

8. The method for supporting multicast in a segment routing label network of claim 6, wherein before multicast forwarding the traffic, the method further comprises:
determining a traffic type of the traffic;
in a case of determining the traffic type as unicast traffic, unicast forwarding the traffic; and
in a case of determining the traffic type as multicast traffic, multicast forwarding the traffic.

9. A device for supporting multicast in a segment routing label network, comprising: a storage device, a processor, and a computer program which is stored in the storage device and is executable on the processor, and when the computer program is executed by the processor, operations of the method for supporting multicast in a segment routing label network of any one of claims 1 to 8 are implemented.

10. A computer-readable storage medium having stored thereon a computer program which, when executed by a processor, implements operations of the method for supporting multicast in a segment routing label network of any one of claims 1 to 8.
